# EUROPÄISCHE PATENTSCHRIFT

(11) **EP 3 802 029 B1**
(45) Veröffentlichungstag und Bekanntmachung des Hinweises auf die Patenterteilung: **07.08.2024**
(21) Anmeldenummer: 19735209.9
(22) Anmeldetag: 10.06.2019
(51) Int. Cl.: B27M 3/00

(54) **VERFAHREN ZUR HERSTELLUNG EINER HOLZTEILVERBINDUNG UND VORRICHTUNG DAZU**
METHOD FOR PRODUCING A LINK BETWEEN WOODEN PARTS AND DEVICE FOR THIS PURPOSE
PROCÉDÉ POUR ÉTABLIR UNE LIAISON ENTRE PARTIES EN BOIS ET DISPOSITIF CORRESPONDANT

(30) Priorität: 09.06.2018 DE 102018004541
(43) Veröffentlichungstag der Anmeldung: 14.04.2021
(73) Patentinhaber: MINDA Industrieanlagen GmbH, 32423 Minden (DE)
(72) Erfinder: HUMMEL, Armin, 87736 Böhen (DE)
(74) Vertreter: Stolmár & Partner Patentanwälte PartG mbB
(86) Internationale Anmeldenummer: PCT/EP2019/000179
(87) Internationale Veröffentlichungsnummer: WO 2019/233627

(56) Entgegenhaltungen:
- WO-A1-2011/015254
- FR-A1- 2 774 112
- US-A- 1 902 716
- US-A- 4 512 131

## Beschreibung

Die Erfindung betrifft ein Verfahren zur Herstellung eines Brettsperrholzelements gemäß dem Oberbegriff des Anspruchs 1, eine Vorrichtung dazu, sowie eine Holzteilverbindung. Ein Verfahren gemäß dem Oberbegriff des Anspruchs 1 ist aus dem Dokument WO 2011/015254 A1 bekannt.

Brettsperrholzelemente werden aus winklig, insbesondere rechtwinklig zueinandergelegten Brettschichten (Einzellagen, oft auch als Längslagen und Querlagen bezeichnet) gebildet und unter Pressdruck gefügt. Diese Elemente, insbesondere in Form einer Wandscheibe oder auch als Deckenplatte weisen eine hohe statische Festigkeit auf, insbesondere wenn mehr als drei Einzellagen vorgesehen sind. So sind oft fünf oder sieben (oder mehr) derartigen Lagen pro Wandscheibe miteinander verleimt, auch aus Gründen der Wärmeisolation für eine Außenwand eines Holzbaues. Durch die hohe Festigkeit werden derartige Brettsperrholzelemente zunehmend auch bei größeren Bürohäusern oder Industriebauten eingesetzt, wobei Wand- oder Deckenplatten mit z. B. bis 20 m Länge und ca. 4 m Höhe (bzw. Breite bei liegender Einbauposition) zum Einsatz kommen, um diese möglichst schnell montieren zu können. Je nach Zweck und Transportmöglichkeiten können die Abmessungen variieren, z. B. für Decken in Treppenhäusern auch größere Breiten vorgesehen sein, ebenso L- oder T-förmige Grunddimensionen ausgebildet sein.

Derartige Brettsperrholzelemente sind aus mehreren Einzellagen gebildet, wobei jede Einzellage aus mehreren, nebeneinander gelegten Brettern (auch als Lamellen bezeichnet) besteht. Diese Bretter sind aufgrund der großen Länge von 15 m und mehr meist keilgezinkt und gehobelt. Beim Nebeneinanderlegen können durch Wölbung und/oder Torsion der einzelnen Lamellen jedoch erhebliche Spalten zwischen benachbarten Schmalkanten der Bretter entstehen, die bei der meist verwendeten Fugenverleimung unter Querdruck eliminiert werden. Die Fugenverleimung ist jedoch recht material- und zeitintensiv, zumal hierbei unterschiedliche Pressanlagen erforderlich sind. So wird zunehmend auf die Fugenverleimung verzichtet, wobei jedoch das Problem besteht, dass aufgrund des vorstehend genannten Verzugs die Einzellagen mit "größerer" Fläche als der Endfläche ausgelegt werden. Zudem kann durch die Eigenspannung der Lamellen auch eine Krümmung in der Vertikalen zur Tischfläche auftreten. Um ein Herabfallen von Querlamellen an den Stirnseiten der Längsbretter zu vermeiden, wurde auch vorgeschlagen, mehrere Längsbretter überstehen zu lassen. Dies bedeutet aber einen zusätzlichen Materialaufwand (Verschnitt) oder Zeitaufwand, um die überstehenden Bretter im Lagenstapel zurückzuschieben. Weiterhin kann durch dieses Verschieben der bereits aufgetragene Leim partiell abgeschabt werden, so dass die Verleimqualität beeinträchtigt werden kann.

Ein weiteres Problem liegt in der Handhabung der losen Lamellen durch Manipulatoren (meist ein großflächiger Vakuumgreifer), mit denen die Bretter zum Beleimplatz transportiert werden, um letztlich den sog. "Presskuchen" aus wechselweise aufeinandergelegten Längsund Querlagen zu bilden. Die Vakuumtechnik funktioniert jedoch nur zuverlässig, wenn keine großen Abweichungen durch verdrehte oder hochstehende Einzellamellen vorliegen, so dass einzelne Lamellen abfallen könnten. In diesem Falle besteht die Gefahr, dass das sog. offene Leimfenster von wenigen Minuten überschritten wird und somit die gesamte Verpressung unbrauchbar werden könnte. Zudem entstehen erhebliche Gefahren für das Personal, wenn versucht wird, abgefallene Lamellen manuell nachzulegen.

Die WO 2011/015254 A1 offenbart eine Lattenfläche für Möbelstücke, bestehend aus einer Reihe von Latten, die mittels Zähnen und Aussparungen zwischen einer Latte und der folgenden Latte verbunden sind, wobei jeder der Zähne an einer Latte einer Aussparung an der anderen Latte entspricht, wobei jede der Dauben mindestens ein Loch umfasst, wobei das Loch jeder Latte mit dem Loch der benachbarten Latte ausgerichtet ist, wobei das Loch für den Durchgang von mindestens einem Zugstabs bestimmt ist. Der Zugstab übt eine Zugkraft zwischen den Endlatten aus, wobei die Zugwirkung die Gesamtheit der Latten umfasst, die aus den Endlatten und einer oder mehreren Zwischenlatten bestehen.

Die FR 2 773 112 A1 offenbart eine Wand umfassend eine Holzstruktur, die aus hochkant angeordneten, parallelen Latten besteht. Die Latten werden so zusammengenagelt, dass die Oberkante einer Latte höher ist als die Oberkanten nebeneinanderliegender Latten, um eine Längsnut zur Aufnahme und Verbindung der Betonplatte zu bilden. An jedem Überstand befindet sich eine Längsaufnahme und Klemmkante für Querverbinder.

Die US 4 512 131 A offenbart ein Bausystem das Längskeile und Querverbindungsstangen verwendet, um eine Massivholz-Wandstruktur mit erhöhter Steifigkeit bereitzustellen. Bretter mit einer Längsnut, die sich entlang jeder Seitenfläche eines Bretts erstrecken, werden verwendet, um den Boden, die Wände und das Dach eines Gebäudes zu bilden. Die Dielen werden durch einen separaten Keil miteinander verbunden, der in die Nuten benachbarter Dielen eingesetzt wird. Auf einer Hauptfläche jeder Diele ist ein Querschlitz ausgebildet, um eine Verbindungsstange aufzunehmen, die eine relative Verschiebung benachbarter Dielen verhindert.

Die US 1 902 716 A offenbart einen Fußboden, der Einheiten aus nebeneinander angeordneten Holzelementen umfasst, wobei miteinander ausgerichtete Nuten in den Elementen durch Drähte verbunden sind, wobei die Nuten einen geringeren Durchmesser als die Drähte aufweisen. Die Nuten sind in Bezug auf die natürliche Maserung so arrangiert, nach dem Verlegen das Hirnholz präsentiert.

Der vorliegenden Erfindung liegt somit die Aufgabe zugrunde, ein Verfahren zur Herstellung eines Brettsperrholzelements und eine Vorrichtung hierfür zu schaffen, um die Herstellung einfacher und flexibler zu gestalten, insbesondere auch prozesssicher.

Diese Aufgabe wird gelöst mit einem Verfahren gemäß Anspruch 1, einer entsprechenden Vorrichtung nach Anspruch 7 und einer Holzteilverbindung nach Anspruch 11. Vorteilhafte Ausgestaltungen sind Gegenstand der Unteransprüche.

Das erfindungsgemäße Verfahren zur Herstellung einer Holzteilverbindung, insbesondere eines Brettsperrholzelements für eine Hauswand, aus mehreren Einzellagen, die bevorzugt als Längslagen und Querlagen in einem Winkel zueinander gelegt und schließlich an ihren einander zugewandten Hauptflächen gefügt, bevorzugt beleimt und verpresst werden, umfasst die Schritte dass zumindest die Bretter der Längslage in ihrer Querrichtung mit einem langgestreckten Keder wenigstens im Endbereich vorfixiert werden, wobei der Keder in eine in die Hauptfläche eingesägte oder eingefräste Nut eingefügt wird.

Das vorgeschlagene Verfahren erlaubt es, das herzustellende Brettsperrholzelement aus den erforderlichen Einzellagen prozesssicher zu legen, dann zu beleimen und in eine Presse zu überführen. Durch die Vorfixierung können die zunächst losen Bretter sicher transportiert werden, insbesondere mit einem Vakuumsaugheber oder Förderbändern, wobei der geschaffene Zusammenhalt durch Strangelemente ein zu großes Abweichen von der "idealen" Plattenform unterbindet, da die Spalten und/oder Krümmungen zwischen den einzelnen Brettern minimiert werden. Die so gelegte und vorfixierte Einzellage ist relativ nahe am Endmaß des BSP-Elements, so dass auch übermäßige Quer- oder Längsverpresswege vermieden werden, was den Bauaufwand und die Prozesszeit der gesamten Anlage wesentlich reduziert.

Das vorgeschlagene Verfahren zur Herstellung eines Brettsperrholzelements ist dadurch gekennzeichnet, dass zumindest die Bretter bzw. Lamellen der Längslage in ihrer Querrichtung unter einem Winkel (insbesondere 90°) zur jeweiligen Brettachse wenigstens im Endbereich mit einem langestreckten Keder (länglichen Strangelement) vorfixiert werden. Das fadenförmige Strangelement ist bevorzugt aus einem Kunststoff-, Textil- oder Metalldraht mit bevorzugt rundem Querschnitt gebildet, kann aber auch bandförmig sein. Der bevorzugt verwendete Keder wird unter Zugspannung in eine Nut eingefügt und verklemmt sich dort, so dass aneinandergefügte Lamellen nicht wieder auseinanderklaffen können. Somit werden die Spaltmaße minimiert, so dass die gelegte Einzellage durch die Vorfixierung nahe am gewünschten Endmaß ist.

Bevorzugt werden sowohl die Längslagen als auch die Querlagen so vorfixiert, wobei die Gefahr des Auseinanderklaffen und Spaltbildung bei Längslagen aufgrund der großen Länge (von z. B. > 15 m) der Lamellen meist größer ist, während sich bei Querlagen die relativ kurzen Lamellen an ihren Schmalkanten besser aneinander fügen. Da jedoch bei Querlagen die Zahl der Lamellen erheblich größer ist, ist auch dort eine Vorfixierung mit einem Strangelement sinnvoll. Um die Vorfixierwirkung des Keders zu erhöhen, wird die Nut bevorzugt schrägwinklig zur Hauptfläche der Bretter eingesägt oder eingefräst, so dass sich das drahtförmige Strangelement besser verklemmt und damit die übertragbare Zugkraft zwischen den Lamellen gesteigert wird, um das Spaltmaß gering zu halten.

Beim vorgeschlagenen Verfahren wird das Strangelement in Form eines Keders von einer Vorratsrolle abgezogen und im gespannten Zustand in die querverlaufende Sägenut eingedrückt, so dass die auf dem Legetisch eng aneinander liegenden Lamellen durch Eigenspannung nicht wieder auseinanderklaffen können. Dieses Eindrücken erfolgt praktisch simultan bzw. kurz hinter einer Säge- oder Frässtation zum Einbringen der Sägenut. Obwohl bei durchgängigen BSP-Elementen die Vorfixierung an den Endbereichen ausreichen kann, sind die Strangelemente bzw. Keder bei Ausschnitten für Gebäudeöffnungen (Fenster oder Türen) jeweils am Rand davon vorgesehen, um insgesamt die Handhabung des BSP-Elements mit Förderanlagen zu verbessern. Der Keder muss dabei nicht parallel zur Fensteroder Türkante verlaufen, sondern kann auch schrägwinklig hierzu verlaufen, um die Fixierung in mehreren Dimensionen zu erhöhen.

Die vorgeschlagene Vorrichtung zum Durchführen des beschriebenen Verfahrens ist dadurch gekennzeichnet, dass zur Vorfixierung der Bretter, mit einem Keder ein Legetisch vorgesehen ist, an dem eine Zuführung für den Keder angeordnet ist.

Diese Vorrichtung ist bevorzugt direkt über dem Legetisch portalartig angeordnet und weist benachbart zur Zuführung eine Fräse oder Säge auf, die im Querdurchlauf (oder einem davon leicht abweichenden Winkel) der aneinandergelegten Bretter die Nut etwa in deren Querrichtung erzeugt, wobei an der Säge oder Fräse bevorzugt auch eine Absaugung angeordnet ist. Zudem sollte benachbart zur Fräse oder Säge wenigstens eine Andruckrolle für den Keder angeordnet sein, so dass dieses in die Nut eingefügte Strangelement unter Vorspannung und Vorfixierung des Lamellenpakets dieses mit geringen Spalten zusammenhält. Durch die schrägwinklige Ausrichtung der Nut kann dieser Zusammenhalt in mehreren Dimensionen wirken, also auch hochstehende Lamellen niederhalten.

Die fertig gepressten Elemente werden nach dem Verpressen auf das Endmaß zugesägt, ebenso die Gebäudeöffnungen. Als vorteilhaft gegenüber vorgeleimten Platten ist hierbei, dass die ausgeschnittenen Bereiche für Fenster oder Türen nicht beleimt sind (d. h. vom sog. Leimportal ausgenommen sind) und daher keinen Abfall darstellen. Dadurch wird die Wirtschaftlichkeit des Verfahrens erheblich verbessert. Das Beleimen der einzelnen Längslagen bzw. Querlagen kann auch außerhalb der Presse über dem Legetisch oder beim bzw. nach dem Überführen in die Presse erfolgen. Solche vorbereiteten Lagenpakete können mit einem Förderband seitlich oder längs in die Presse eingeschoben werden, ggf. auch vor dem Beleimen gewendet werden, damit die Nuten und Keder bei der fertigen Platte nicht sichtbar sind. Ebenso kann das wechselweise Beleimen der einzelnen Längslagen und dann der Querlagen direkt in der Presse durchgeführt werden, so dass das Aneinanderlegen auf dem Quer- bzw. Längs-Legetisch mit Einbringen der Vorfixierung und Fördern der vorfixierten Längs- und Querlagen nahezu kontinuierlich und damit sehr schnell erfolgen kann.

Nachfolgend wird ein Ausführungsbeispiel der Erfindung anhand der Zeichnung beschrieben. Hierbei zeigen:
Fig. 1 eine schematische Draufsicht auf eine Vorrichtung zum Legen einer Längslage und einer Querlage, jeweils seitlich von einer Presse;
Fig. 2 eine Seitenansicht mit einer Kreissäge zum Einbringen einer Sägenut und Zuführung eines Strangelements zu den Lamellen bzw. Brettern;
Fig. 3 eine Bretterlage in schematischer Perspektivansicht;
Fig. 4 einen schematischen Querschnitt durch drei BSH-Lagen.
Fig. 5 eine schematische Perspektivansicht auf eine Holzteilverbindung in Brettform;
Fig. 6 eine Stirnansicht auf ein Holzstück mit zwei schräg verlaufenden Nuten; und
Fig. 7 eine Stirnansicht auf einen Brettabschnitt mit versetzten Nuten.

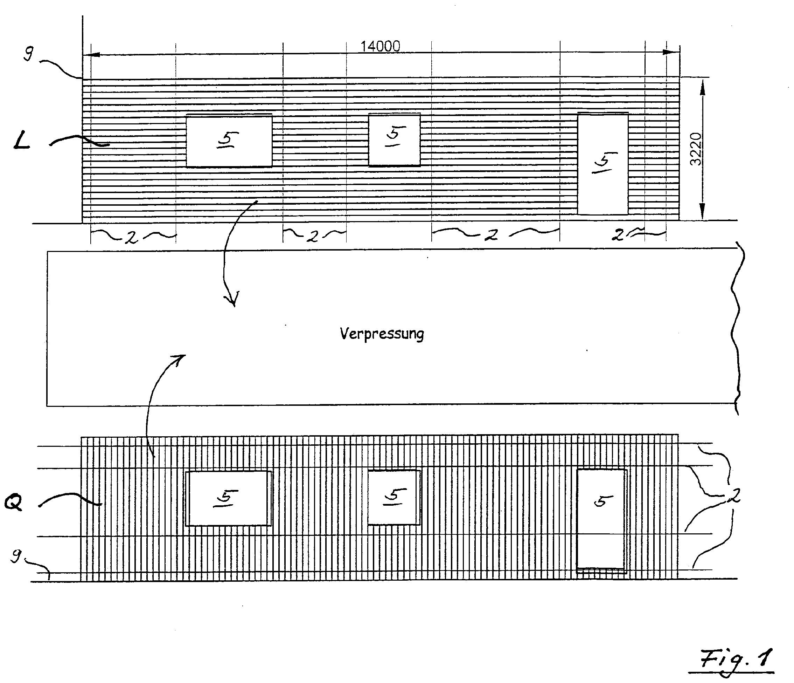

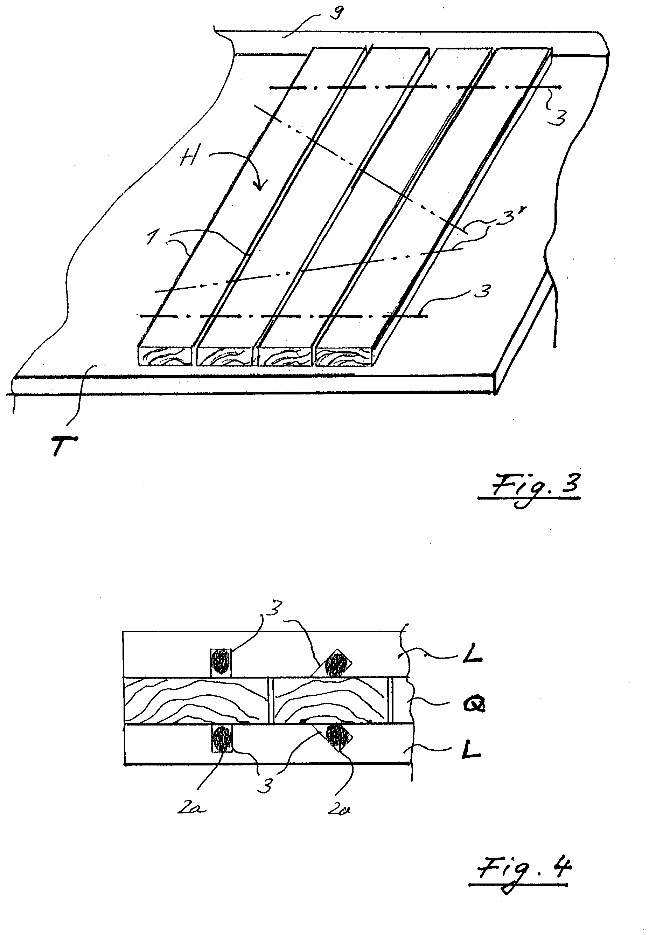

Fig. 1 zeigt eine schematische Draufsicht auf eine Presse, in der mehrere Längslagen L und Querlagen Q zu einem Brettschichtholzelement (BSH) gefertigt wird. Die hier oben dargestellte Längslage L weist z. B. eine Länge von 14 m und (in der Ausführung als Wand) eine Höhe von über 3 m auf. Gleiches gilt für die hier unten dargestellte Querlage Q, die aus einer Vielzahl von Brettern 1 (vgl. Fig. 3) zusammengestellt ist (sog. "Legen"). Entsprechend der hier z. B. um 90° unterschiedlichen Legerichtung weisen die rechts und links der Presse angeordneten Legetische eine rechtwinklig versetzte Anschlagschiene 9 auf (vgl. auch Fig. 3). Nach dem Zusammenstellen der jeweiligen Längslage L und Querlage Q werden diese schichtweise in die Presse überführt, wie mit den bogenförmigen Pfeilen angedeutet ist, und nach der Beleimung (Leimauftrag nur auf der Hauptfläche H; vgl. Fig. 3) zum BSH-Element gepresst. Auch andere Fügeverfahren sind möglich. Dadurch wird eine sichere Verbindung der einzelnen Lamellen mit Brettern benachbarter Einzellagen sichergestellt, wobei auch Ausschnitte 5 für Fenster oder Türen deckungsgleich angeordnet sind.

Wesentlich ist hier das Einbringen von Strangelementen 2 in Querrichtung zum Brettverlauf, bevorzugt in Form von Kedern. Der Begriff "Querrichtung" ist hier nicht auf 90° beschränkt, sondern kann z. B. auch 80° zur Brettrichtung sein (vgl. Fig. 3). In der Längslage L sind hier acht derartiger Keder 2a (vgl. auch Fig. 4) vorgesehen, nämlich jeweils an den Endbereichen und benachbart zu den drei Öffnungen 5. In der Querlage Q sind "nur" vier Strangelemente 2 erforderlich, nämlich wiederum an den Endbereichen (hier oben und unten), sowie entlang den Fenstern. Durch die hier rechts dargestellte Tür verläuft der Keder 2a weiter, um den Verbund zum rechten Endbereich sicherzustellen, nämlich ein gewisse Vorspannung zwischen den einzelnen Lamellen. Somit sind die einzelnen Bretter an ihren Schmalkanten vorfixiert und damit die Einzellage als ein Paket oder Bauelement zusammengehalten, um so zur Verpressung in die (hier mittige) Presse transportiert zu werden (z. B. mit je einer seitlichen Rollenbahn). Der durch die Tür verlaufende Keder 2a wird dann z. B. auf der Baustelle abgeschnitten.

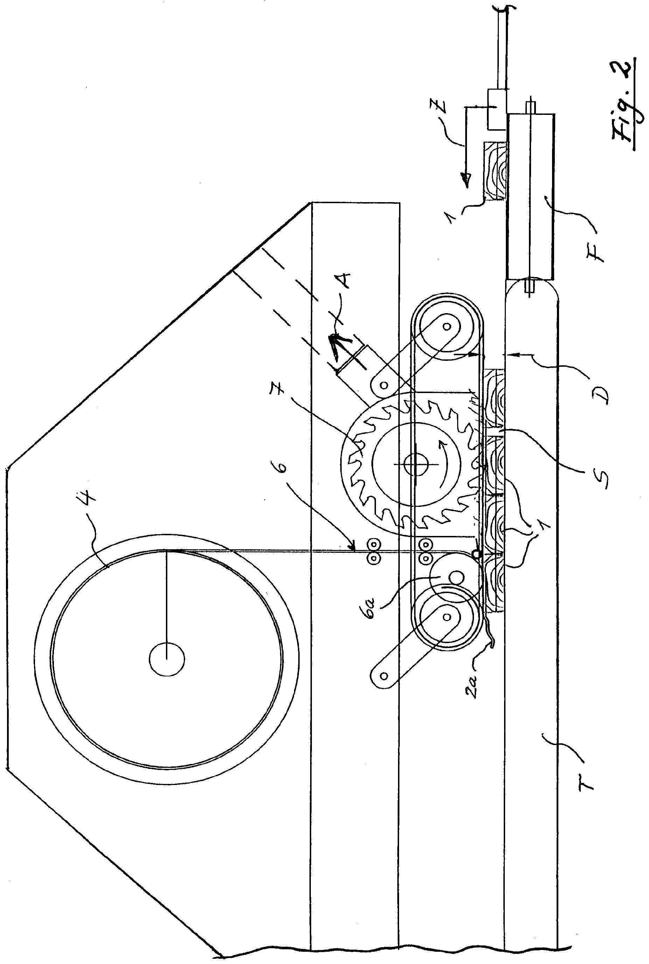

Fig. 2 zeigt den Legevorgang mit hier vier Brettern 1 auf einem Legetisch T, auf den eine weitere Lamelle 1 (hier rechts auf einem Förderband F) mittels einem Zuführschieber Z taktweise verschoben wird. Die jeweils eintreffende Lamelle 1 wird hier von Förderriemen druckbeaufschlagt (Pfeil D) und an die bereits gelegten Bretter 1 geschoben, so dass der jeweilige Spalt S an den Schmalkanten minimiert wird. Über dem so vorbereiteten Paket aus gelegten Brettern 1 ist eine Zuführung 6 (hier mit mehreren Walzen) und eine Vorratsrolle 4 für das drahtförmige Strangelement 2, einen Keder 2a, vorgesehen. Der (einige Zentimeter) überstehende Anfang des Keders 2a (vgl. auch Fig. 1, mit den überstehenden Enden des Strangelements 2) ist hier am linken End-Brett nach dem Durchlauf über eine Andruckrolle 6a erkennbar. Zum besseren Halt am Endbereich kann der Keder 2a auch etwas abgekantet werden, insbesondere in der Ausführung als zugfestem Metalldraht, vorzugsweise aus relativ weichem Aluminium oder Kupfer, um eine spätere Bearbeitung nicht zu beeinträchtigen. Überstände des Strangelements 2 können so nach der Verpressung oder auf der Baustelle mit einem Seitenschneider einfach entfernt werden.

Bevorzugt wird der Keder 2a in eine Nut 3 eingedrückt (vgl. Fig. 3 und 4), die beim Durchlauf der Bretter 1 unter der Zuführung 6 hindurch simultan eingeschnitten (oder auch gefräst) wird. Dies erfolgt bei dicht aneinander gefügten Brettern 1, also mit geringem Spalt S, so dass an und nach der Andruckrolle 6a das Strangelement 2 die Lamellen verspannt bzw. vorfixiert ist und zusammenhält. Die Säge 7 schneidet somit eine zur Bretter-Hauptrichtung (weitgehend) querverlaufende Nut 3, in der der Keder 2a mit Vorspannung geklemmt ist, um so das Bretter-Paket einer Lage sicher zusammenzuhalten. Die Säge 7 ist hierbei mit einer Absauganlage A ausgerüstet, um die geschaffene Nut 3 sauber zu halten.

In Fig. 3 ist der Verlauf der Nut 3 in Querrichtung an den Endbereichen der Bretter 1 in Strichpunktlinien eingezeichnet, ebenso schematisch der Legetisch T mit einer Anschlagschiene 9. Hier sind nur vier Lamellen gezeigt, wobei für eine Längslage L, je nach Abmessungen, meist ca. dreißig (lange) Bretter und für eine Querlage rund hundert (kürzere) Bretter 1 benötigt werden. Die Nut 3 kann auch in einem von 90° abweichenden Winkel eingearbeitet werden, wie mit doppelt-strichpunktierten Linien 3' eingezeichnet ist, um den Zusammenhalt des Brettpakets einer Einzellage zu verbessern.

In Fig. 4 ist ein Querschnitt durch ein BSH-Element mit hier nur drei Lagen gezeigt, obwohl für Außenwände meist sieben (oder mehr) Einzellagen verwendet werden. Hierbei ist der in die Nuten 3 eingedrückte Keder 2a erkennbar, der durch die Einklemmkräfte bzw. Reibung in der Nut 3 ein Auseinanderklaffen im Spaltbereich zwischen den Brettern 1 vermeidet bzw. minimiert. Zur weiteren Verankerung in der Nut 3 kann diese auch schrägwinklig ausgerichtet sein, wie im rechten Bereich von Fig. 4 angedeutet ist.

Bei der hier oberen Längslage L weisen die Nuten 3 nach unten, um dem BSH-Element eine glatte Außenfläche zu bieten. Hierzu kann z. B. das in Fig. 3 dargestellte Paket "kopfüber" gewendet werden, oder aber auch die Säge 7 (oder ein Fingerfräser) unterhalb des Legetisches T angeordnet sein (mit entsprechenden Durchtrittschlitzen) und das Strangelement 2 (Keder 2a) von unten her zugeführt werden. Da die Späne dann nach unten fallen können, kann auf eine Absaugung auch (weitgehend) verzichtet werden.

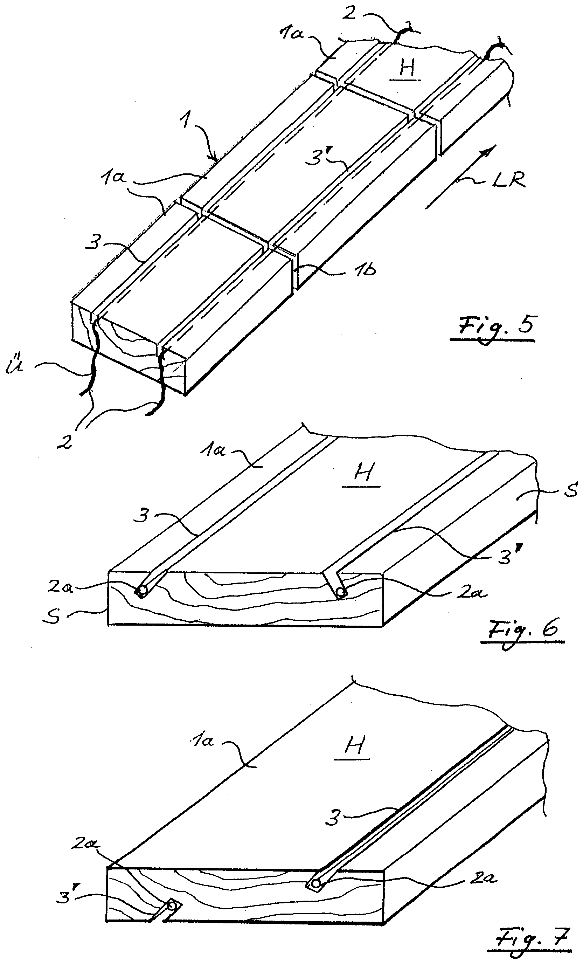

Fig. 5 zeigt eine schematische Ansicht einer Holzteilverbindung zur Bildung eines langen Bretts aus mehreren Holzstücken 1a (Kurzlamellen oder Brettabschnitte). Die Holzstücke 1a können z. B. eine Mindestlänge von 30 cm besitzen, wobei je nach Zuschnitt und Sortierung auch Brettabschnitte von 1 Meter oder mehr verwendet werden können. So ist in Fig. 1 das linke Holzstück 1a 2. B. 40 cm lang, das an einem Querstoß 1 b folgende z. B. 50 cm und der darauf folgende Brettabschnitt z. B. 90 cm. U m damit ein Brett 1 von z. B. 14 m Länge (für einen Leimbinder oder eine Längslage L) zu bilden, werden z. B. 20 Holzstücke (unterschiedlicher Länge) an 19 Querstößen aneinander gefügt. Der Querstoß 1b ist hierbei als Stumpfstoß (ggf. mit einer Leimfuge) ausgebildet, so dass auf aufwändige Keilzinken verzichtet werden kann. Neuerungsgemäß ist in die Hauptfläche H wenigstens eine Nut 3 (hier zwei Nuten 3 und 3') eingearbeitet, in die ein längliches Strangelement 2 eingesetzt ist, insbesondere mit Vorspannung in Form eines Keders 2a. Hierdurch werden die Brettabschnitte an ihren Querstößen 1b aneinander gedrückt, so dass eine sichere Vorfixierung der einzelnen Brettabschnitte erzielt wird.

Wesentlich ist hier das Einbringen von Strangelementen 2 in Längsrichtung LR (Brettverlauf), bevorzugt in Form von Kedern 2a (sog. Kederschnur) mit axialer Vorspannung. Hier sind jeweils zwei derartiger Keder 2a (vgl. auch Fig. 2 und 3) vorgesehen. Durch das Eindrücken der Keder 2a in die Nut 3 (bzw. Nut 3') ergibt sich eine gewisse Vorspannung zwischen den einzelnen Holzstücken 1a. Somit sind die einzelnen Brettabschnitte a n ihren Querstößen 1 bvorfixiert und damit das Brett 1 als Einzellage oder Bauelement zusammengehalten, um so z. B. zu einer Presse transportiert zu werden (z. B. mit je einer seitlichen Rollenbahn). Da die durch das Brett 1 verlaufenden Keder 2a einen endseitigen Überstand Ü aufweisen, kann das in Längsrichtung L zusammengesetzte Brett auch manuell (oder einem Greifgerät) gut gegriffen und z. B. von zwei Arbeitern oder einer Förderanlage transportiert werden. Gleiches gilt für Roboter, wobei das zusammengefügte Brett bevorzugt um 180° gewendet wird, so dass die Strangelemente 2 unten liegen und damit einen Durchhang vermeiden.

Fig. 6 zeigt eine Stirnansicht auf einen Brettabschnitt, wobei die zwei Nuten 3, 3' hier schräg mit einem Winkel von ca. 30° zur Hauptfläche H eingeschnitten sind, um die Verankerung des Strangelements 2 in der jeweiligen Nut zu verbessern. Hierzu kann der Keder 2a auch eine strukturierte Oberfläche aufweisen, insbesondere in der Ausführung als Kunststofffaden (z. B. aus Nylon in Art einer Angelschnur) oder Metalldraht, vorzugsweise aus relativ welchem Aluminium oder Kupfer, um eine spätere Bearbeitung nicht zu beeinträchtigen. Die Überstände Ü des Strangelements 2 können so nach der Pressung oder auf der Baustelle mit einem Seitenschneider oder einer Schere einfach entfernt werden.

Bevorzugt wird der Keder 2a mit einer Andruckrolle in die Nut(-en) 3, 3' eingedrückt, die beim Durchlauf der Brettabschnitte simultan eingeschnitten (oder auch gefräst) wird. Das Strangelement 2 kann hierbei einen geringfügig größeren Durchmesser (z. B. 6 mm) als die Nutbreite (z. B. mit 5 m m gefertigt) aufweisen. Dies erfolgt bei dicht aneinander gefügten Holzstücke 13, also mit geringem Querstoß 1b, so dass das in Längsrichtung L zugfeste, aber noch geringfügig elastische Strangelement 2 die Brettabschnitte axial verspannt bzw. vorfixiert ist und zusammenhält. Das Strangelement 2 ist daher (im Gegensatz zu Holzleisten oder Holzdübeln) mit Vorspannung in der als Kederleiste dienenden Nut 3 geklemmt, um so die Brettabschnitte praktisch stoßfrei zusammenzuhalten.

In Fig. 7 sind die Nuten 3, 3' an einander gegenüberliegenden Hauptflächen H der Brettabschnitte gezeigt. Auch hier sind die Nuten 3, 3' in einem von 90° abweichenden Winkel zur Hauptfläche H eingearbeitet werden, u m die Klemmwirkung des eingedrückten Keders 2a und damit den Zusammenhalt der Brettabschnitte in Längsrichtung L zu verbessern. Der in die Nuten 3, 3' eingedrückte, zugfeste Keder 2a vermeidet bzw. minimiert durch seine axialen Klemmkräfte bzw. Reibung in der jeweiligen Nut 3, 3` ein Auseinanderklaffen am jeweiligen Querstoß 1b zwischen den Brettabschnitten. Das hier untere Strangelement 2 (Keder 2a, wie meist als Rollenware, sog. Kederschnur erhältlich) zur linken Seitenkante 8 hin kann auch von unten her zugeführt werden, wobei auch die Säge (oder ein Fräser) zur Bildung der Nut 3' von unten her in die Brettabschnitte eintaucht.

## Patentansprüche

1. Verfahren zur Herstellung einer Holzteilverbindung, insbesondere eines Brettsperrholzelements für eine Hauswand, aus mehreren Einzellagen, die bevorzugt als Längslagen (L) und Querlagen (Q) in einem Winkel zueinander gelegt und schließlich an ihren einander zugewandten Hauptflächen (H) gefügt, bevorzugt beleimt und verpresst werden,
**dadurch gekennzeichnet, dass**
zumindest die Bretter (1) der Längslage (L) in ihrer Querrichtung mit einem langgestreckten Keder (2a) wenigstens im Endbereich vorfixiert werden, wobei der Keder (2a) in eine in die Hauptfläche (H) eingesägte oder eingefräste Nut (3, 3') eingefügt wird.

2. Verfahren nach Anspruch 1, **dadurch gekennzeichnet, dass** der Keder (2a) aus einem Kunststoff-, Textil- oder Metalldraht oder zugfesten Naturfasern besteht.

3. Verfahren nach Anspruch 1 oder 2, **dadurch gekennzeichnet, dass** der Keder (2a) mit axialer Vorspannung in eine eingesägte oder eingefräste Nut (3, 3') eingefügt wird.

4. Verfahren nach Anspruch 3, **dadurch gekennzeichnet, dass** die Nut (3, 3') schrägwinklig zur Hauptfläche (H) der Bretter (1) eingeschnitten wird.

5. Verfahren nach einem der Ansprüche 1 - 4, **dadurch gekennzeichnet, dass** der Keder (2A) von einer Rolle (4) abgezogen und in die Nut (3, 3') eingedrückt wird, insbesondere unter axialer Vorspannung.

6. Verfahren nach einem der Ansprüche 1 - 5, **dadurch gekennzeichnet, dass** der Keder (2a) jeweils am Rand von Ausschnitten (5) für Gebäudeöffnungen vorgesehen ist.

7. Vorrichtung zum Durchführen des Verfahrens nach einem der Ansprüche 1 - 6, wobei zur Vorfixierung der Bretter (1) mit einem Keder (2a) ein Legetisch (T) vorgesehen ist, über oder unter dem eine Zuführung (6) für den Keder (2a) angeordnet ist,
**dadurch gekennzeichnet, dass**
benachbart zur Zuführung (6) eine Fräse oder Säge (7) angeordnet ist, die im Querdurchlauf der Bretter (7) die Nut (3) erzeugt.

8. Vorrichtung nach Anspruch 7, **dadurch gekennzeichnet, dass** die Fräse oder Säge (7) mittels eines Portals über die jeweilige Einzellage (L oder Q) fahrbar ist.

9. Vorrichtung nach Anspruch 7 oder 8, **dadurch gekennzeichnet, dass** benachbart zur Fräse oder Säge (7) wenigstens eine Andruckrolle (6a) für den Keder (2a) angeordnet ist, um diesen in die Nut (3, 3') einzudrücken, insbesondere mit axialer Vorspannung.

10. Vorrichtung nach einem der Ansprüche 7 bis 9, **dadurch gekennzeichnet, dass** die Nut (3') schrägwinklig zur Längsachse der Bretter (1) ausgerichtet ist.

11. Holzteilverbindung für mehrere Holzstücke, insbesondere für Bretter, Bohlen oder Lamellen zur Verwendung gemäß einem der vorhergehenden Ansprüche, mit wenigstens einem Querstoß, an dem die Holzstücke in Längsrichtung der Bretter, Bohlen oder Lamellen aneinandergefügt, insbesondere verleimt sind, **dadurch gekennzeichnet, dass** die Holzstücke (1a) in ihrer Längsrichtung (LR) unter Bildung eines Bretts (1) mit einem langgestreckten Keder (2a) verspannt sind, wobei der Keder (2a) in eine in die Hauptfläche (H) eingesägte oder eingefräste Nut (3, 3') eingefügt ist.

12. Holzteilverbindung nach Anspruch 11, **dadurch gekennzeichnet, dass** der Keder (2a) aus einem Kunststoffstrang, Textil- oder Metalldraht oder zugfesten Naturfasern besteht.

13. Holzteilverbindung nach Anspruch 11 oder 12, **dadurch gekennzeichnet, dass** der Querstoß (1b) als Stumpfstoß ausgebildet ist.

14. Holzteilverbindung nach einem der Ansprüche 11 - 13, **dadurch gekennzeichnet, dass** zwei Nuten (3, 3') vorgesehen sind, die an gegenüberliegenden Hauptflächen (H) der jeweils ein Brett (1) bildenden Holzstücke (1a) angeordnet sind, wobei bevorzugt die beiden Nuten (3, 3') zu entgegengesetzten Schmalkanten (S) der Holzstücke (1a) hin versetzt angeordnet sind.

## Claims

1. Method for producing a wooden part connection, in particular a timber board element for a house wall, from a plurality of individual layers, which are preferably laid at an angle to one another as longitudinal layers (L) and transverse layers (Q) and are finally joined, preferably glued and pressed, on their mutually facing main surfaces (H), **characterized in that**
at least the boards (1) of the longitudinal layer (L) are pre-fixed in their transverse direction with an elongated sealing trim (2a) at least in the end region, wherein the sealing trim (2a) is inserted into a groove (3, 3') that is sawn or milled into the main surface (H).

2. Method according to Claim 1, **characterized in that** the sealing trim (2a) is made of a plastic, textile or metal wire or tensile-resistant natural fibres.

3. Method according to Claim 1 or 2, **characterized in that** the sealing trim (2a) is inserted with axial prestress into a sawn or milled groove (3, 3').

4. Method according to Claim 3, **characterized in that** said groove (3, 3') is cut obliquely to said main surface (H) of said boards (1).

5. Method according to any of Claims 1-4, **characterized in that** the sealing trim (2A) is pulled off a roller (4) and pressed into the groove (3, 3'), in particular under axial prestress.

6. Method according to any of Claims 1-5, **characterized in that** the sealing trim (2a) is provided in each case at the edge of cutouts (5) for building openings.

7. Device for carrying out the method according to any of Claims 1-6, wherein, for pre-fixing the boards (1), a laying table (T) is provided with a sealing trim (2a), above or below which a feed (6) for the sealing trim (2a) is arranged,
**characterized in that**
a milling cutter or saw (7), which produces the groove (3) in the transverse passage of the boards (7), is arranged adjacent to the feed (6).

8. Device according to Claim 7, **characterized in that** the milling cutter or saw (7) can be moved over the respective individual layer (L or Q) by means of a gantry.

9. Device according to Claim 7 or 8, **characterized in that** at least one pressure roller (6a) for the sealing trim (2a) is arranged adjacent to the milling cutter or saw (7), in order to press the sealing trim into the groove (3, 3'), in particular with axial prestress.

10. Device according to any of Claims 7 to 9, **characterized in that** said groove (3') is oriented obliquely to the longitudinal axis of said boards (1).

11. Wooden part connection for a plurality of pieces of wood, in particular for boards, planks or slats for use according to any of the preceding claims, having at least one transverse joint at which the pieces of wood are joined together, in particular glued, in the longitudinal direction of the boards, planks or slats, **characterized in that** the pieces of wood (1a) are braced in their longitudinal direction (LR) with an elongated sealing trim (2a) to form a board (1), wherein the sealing trim (2a) is inserted into a groove (3, 3') sawn or milled into the main surface (H).

12. Wooden part connection according to Claim 11, **characterized in that** the sealing trim (2a) consists of a plastic strand, textile or metal wire, or tensile-resistant natural fibres.

13. Wooden part connection according to Claim 11 or 12, **characterized in that** the transverse joint (1b) is designed as a butt joint.

14. Wooden part connection according to any of Claims 11-13, **characterized in that** two grooves (3, 3') are provided, which are arranged on opposite main surfaces (H) of the pieces of wood (1a) each forming a board (1), wherein the two grooves (3, 3') are preferably arranged offset toward opposite narrow edges (S) of the pieces of wood (1a).

## Revendications

1. Procédé pour établir une liaison entre des parties en bois, notamment un élément en bois lamellé-croisé pour un mur de maison, constitué de plusieurs couches individuelles qui sont de préférence posées sous forme de couches longitudinales (L) et de couches transversales (Q) en formant un angle les unes par rapport aux autres et qui sont finalement assemblées, de préférence collées et comprimées, au niveau de leurs surfaces principales (H) tournées les unes vers les autres,
**caractérisé en ce qu'**au moins les planches (1) de la couche longitudinale (L) sont préfixées dans leur direction transversale avec un bourrelet allongé (2a) au moins dans la zone d'extrémité, le bourrelet (2a) étant inséré dans une rainure (3, 3') sciée ou fraisée dans la surface principale (H).

2. Procédé selon la revendication 1, **caractérisé en ce que** le bourrelet (2a) est constitué d'un fil plastique, textile ou métallique ou de fibres naturelles résistantes à la traction.

3. Procédé selon la revendication 1 ou 2, **caractérisé en ce que** le bourrelet (2a) est inséré avec une précontrainte axiale dans une rainure (3, 3') sciée ou fraisée.

4. Procédé selon la revendication 3, **caractérisé en ce que** la rainure (3, 3') est entaillée obliquement par rapport à la surface principale (H) des planches (1).

5. Procédé selon l'une des revendications 1 à 4, **caractérisé en ce que** le bourrelet (2A) est retiré d'un rouleau (4) et enfoncé dans la rainure (3, 3'), notamment sous précontrainte axiale.

6. Procédé selon l'une des revendications 1 à 5, **caractérisé en ce que** le bourrelet (2a) est prévu respectivement sur le bord de découpes (5) pour des ouvertures de bâtiment.

7. Dispositif pour la mise en œuvre du procédé selon l'une des revendications 1 à 6,
une table de pose (T) étant prévue pour la préfixation des planches (1) avec un bourrelet (2a), au-dessus ou au-dessous de laquelle est disposée une alimentation (6) pour le bourrelet (2a), **caractérisé en ce qu'**une fraise ou une scie (7) est disposée au voisinage de l'alimentation (6), laquelle produit la rainure (3) lors du passage transversal des planches (7).

8. Dispositif selon la revendication 7, **caractérisé en ce que** la fraise ou la scie (7) peut être déplacée au moyen d'un portique au-dessus de la couche individuelle respective (L ou Q).

9. Dispositif selon la revendication 7 ou 8, **caractérisé en ce qu'**au moins un rouleau de pression (6a) pour le bourrelet (2a) est disposé à proximité de la fraise ou de la scie (7), afin d'enfoncer celui-ci dans la rainure (3, 3'), notamment sous précontrainte axiale.

10. Dispositif selon l'une des revendications 7 à 9, **caractérisé en ce que** la rainure (3') est orientée obliquement par rapport à l'axe longitudinal des planches (1).

11. Liaison entre des parties en bois pour plusieurs pièces de bois, notamment pour des planches, madriers ou lamelles pour une utilisation selon l'une des revendications précédentes, avec au moins un joint transversal au niveau duquel les pièces de bois sont assemblées les unes aux autres dans la direction longitudinale des planches, madriers ou lamelles, notamment collées, **caractérisée en ce que** les pièces de bois (1a) sont serrées dans leur direction longitudinale (LR) en formant une planche (1) avec un bourrelet allongé (2a), le bourrelet (2a) étant inséré dans une rainure (3, 3') sciée ou fraisée dans la surface principale (H).

12. Liaison entre des parties en bois selon la revendication 11, **caractérisée en ce que** le bourrelet (2a) est constitué d'un cordon de matière plastique, d'un fil textile ou métallique ou de fibres naturelles résistantes à la traction.

13. Liaison entre des parties en bois selon la revendication 11 ou 12, **caractérisée en ce que** le joint transversal (1b) est conçu comme un joint bout à bout.

14. Liaison entre des parties en bois selon l'une des revendications 11 à 13, **caractérisée en ce que** deux rainures (3, 3') sont prévues qui sont disposées sur des surfaces principales (H) opposées des pièces de bois (1a) formant chacune une planche (1), les deux rainures (3, 3') étant de préférence décalées vers des bords étroits (S) opposés des pièces de bois (1a).
